# FASCICULE DE BREVET EUROPEEN

(11) **EP 3 071 441 B1**
(45) Date de publication et mention de la délivrance du brevet: **13.09.2017**
(21) Numéro de dépôt: 14806005.6
(22) Date de dépôt: 04.11.2014
(51) Int. Cl.: B60L 11/18, H02J 3/32, H02J 7/00, H02J 7/02

(54) **DISPOSITIF ET PROCEDE DE RECHARGE DE VEHICULES ELECTRIQUES OU HYBRIDES**
VORRICHTUNG UND VERFAHREN ZUM AUFLADEN VON ELEKTRISCHEN ODER HYBRIDFAHRZEUGEN
DEVICE AND METHOD FOR RECHARGING ELECTRIC OR HYBRID VEHICLES

(30) Priorité: 19.11.2013 FR 1361350
(43) Date de publication de la demande: 28.09.2016
(73) Titulaire: Commissariat à l'Energie Atomique et aux Energies Alternatives, 75015 Paris (FR)
(72) Inventeur: TRAN, Quoc-Tuan, F-38610 Gieres (FR); NGUYEN, Van-Linh, F-38000 Grenoble (FR)
(74) Mandataire: Thibon, Laurent
(86) Numéro de dépôt international: PCT/FR2014/052805
(87) Numéro de publication internationale: WO 2015/075341

(56) Documents cités:
- FR-A1- 2 952 247
- US-A1- 2011 156 651
- US-A1- 2012 310 433
- BOUALLAGA ANOUAR ET AL: "Minimization of energy transmission cost and CO2 emissions using coordination of electric vehicle and wind power (W2V)", 2013 IEEE GRENOBLE CONFERENCE, IEEE, 16 juin 2013 (2013-06-16), pages 1-6, XP032520076, DOI: 10.1109/PTC.2013.6652299

## Description

### Domaine

La présente demande concerne un dispositif et un procédé de recharge de véhicules électriques ou hybrides rechargeables.

### Exposé de l'art antérieur

Le nombre de véhicules électriques et de véhicules hybrides rechargeables utilisés est en croissance constante. A titre d'exemple, l'Union Française de l'Electricité (UFE) estime qu'en 2030 près de six millions de véhicules électriques ou hybrides rechargeables seront en circulation en France.

Ces véhicules disposent de batteries qui doivent être régulièrement rechargées par le réseau de distribution électrique. La recharge des véhicules électriques et hybrides rechargeables aura, sans mesures particulières, un impact significatif sur la courbe de consommation nationale. En effet, un million de véhicules électriques ou hybrides rechargeables en recharge lente simultanée soutirent entre 3000 et 6000 MW.

Il est souhaitable de contrôler la demande de puissance électrique pour la recharge de véhicules électriques et hybrides rechargeables pour éviter des pointes de consommation et ainsi limiter les modifications à apporter au réseau de distribution électrique actuel, comme le renforcement des lignes électriques. Il est, en outre, souhaitable que la plus grande part possible de l'énergie électrique utilisée pour la recharge des véhicules électriques ou hybrides rechargeables provienne de sources d'énergies renouvelables, telles que des centrales photovoltaïques, des centrales éoliennes, des centrales hydrauliques, etc.

Il existe des procédés de recharge de véhicules électriques ou hybrides rechargeables qui permettent de commander la puissance électrique fournie aux véhicules. Toutefois, ces procédés nécessitent généralement la communication, à un module de gestion, de nombreux paramètres relatifs aux véhicules électriques ou hybrides à recharger, par exemple le type de véhicules, la capacité de la batterie de chaque véhicule, le profil de recharge de la batterie de chaque véhicule, etc. Il peut être difficile de collecter un grand nombre de données pour les transmettre au module de gestion. En outre, ces procédés peuvent requérir de contrôler le nombre de véhicules à recharger alors que ce nombre est en pratique variable et/ou de contrôler les instants de début ou de fin de recharge alors que ces instants ne sont en pratique pas maitrisables. De plus, lorsque la recharge est réalisée à partir de l'énergie électrique fournie par une centrale électrique à énergie renouvelable, les procédés de recharge peuvent requérir de connaître une prévision de l'énergie qui sera fournie par cette centrale. Toutefois, une telle prévision peut ne pas être disponible ou être différente de la production réelle d'énergie électrique par la centrale électrique.

### Résumé

Un objet d'un mode de réalisation est de pallier tout ou partie des inconvénients des procédés et dispositifs de recharge de véhicules électriques et hybrides rechargeables décrits précédemment.

Un autre objet d'un mode de réalisation est que le nombre de données relatives aux véhicules à recharger nécessaires à la mise en oeuvre du procédé de recharge est réduit.

Un autre objet d'un mode de réalisation est que le procédé de recharge peut être mis en oeuvre en temps réel.

Un autre objet d'un mode de réalisation est qu'il permet de favoriser l'utilisation d'énergies renouvelables pour la recharge des véhicules.

Ainsi, un mode de réalisation prévoit un procédé de recharge de véhicules électriques ou hybrides par des bornes de recharge reliées à un réseau de distribution électrique, le procédé comprenant les étapes suivantes :
fourniture, pour chaque véhicule à recharger, à un module de commande intégré audit véhicule ou à la borne de recharge dudit véhicule, de données représentatives d'une puissance électrique totale souhaitée pour la recharge des véhicules ;
mesure de la puissance électrique totale fournie par le réseau de distribution électrique pour la recharge des véhicules et fourniture de données représentatives de la puissance électrique totale mesurée audit module de commande pour chaque véhicule à recharger ; et
détermination, par ledit module de commande pour chaque véhicule à recharger, d'une consigne de la puissance électrique de recharge dudit véhicule à partir de la différence entre la puissance électrique totale souhaitée et la puissance électrique totale mesurée.

Selon un mode de réalisation, la consigne de la puissance électrique de recharge dudit véhicule est, en outre, déterminée à partir de l'état de charge du véhicule, de la durée de recharge du véhicule.

Selon un mode de réalisation, les données représentatives de la puissance électrique totale souhaitée sont fournies par le gestionnaire du réseau et/ou par au moins une centrale électrique sélectionnée parmi le groupe comprenant une centrale photovoltaïque, une centrale éolienne, une centrale hydraulique ou une usine marémotrice.

Selon un mode de réalisation, le procédé comprend la détermination, par ledit module de commande pour chaque véhicule à recharger, d'un premier coefficient par logique floue à partir de l'état de charge du véhicule et de la durée de recharge du véhicule et la détermination de la consigne de la puissance électrique de recharge dudit véhicule à partir du premier coefficient.

Selon un mode de réalisation, le procédé comprend, en outre, l'étape de multiplication de la puissance électrique de charge maximale dudit véhicule par un deuxième coefficient obtenu à partir du premier coefficient et de la puissance électrique totale mesurée.

Selon un mode de réalisation, le procédé comprend les étapes suivantes :
- déterminer la différence entre la puissance électrique totale souhaitée et la puissance électrique totale mesurée ; et
- déterminer le deuxième coefficient à partir du produit entre le premier coefficient et ladite différence.

Selon un mode de réalisation, le deuxième coefficient est égal à l'intégrale du produit entre le premier coefficient et ladite différence.

Selon un mode de réalisation, la détermination du premier coefficient par logique floue comprend la détermination de premières valeurs de premières fonctions d'appartenance de premiers ensembles flous associés à l'état de charge du véhicule et de deuxièmes valeurs de deuxièmes fonctions d'appartenance de deuxièmes ensembles flous associés à la durée de recharge du véhicule.

Selon un mode de réalisation, la détermination du premier coefficient par logique floue comprend l'utilisation d'une première table d'inférence et d'une troisième fonction d'appartenance pour le premier coefficient lors d'une diminution de la puissance électrique totale souhaitée et d'une deuxième table d'inférence, différente de la première table d'inférence, et d'une quatrième fonction d'appartenance pour le premier coefficient différente de la troisième fonction d'appartenance, lors d'une augmentation de la puissance électrique totale souhaitée.

Un mode de réalisation prévoit également un dispositif de recharge de véhicules électriques ou hybrides, comprenant des bornes de recharge reliées à un réseau de distribution électrique, chaque borne de recharge étant reliée à l'un des véhicules à recharger, le dispositif comprenant, en outre, pour chaque véhicule à recharger, un module de commande intégré audit véhicule ou à la borne de recharge dudit véhicule, le dispositif comprenant des moyens de transmission, au module de commande pour chaque véhicule à recharger, de données représentatives d'une puissance électrique totale souhaitée pour la recharge des véhicules, le dispositif comprenant, en outre, un capteur adapté à mesurer la puissance électrique totale fournie par le réseau de distribution électrique pour la recharge desdits véhicules et des moyens de transmission de données représentatives de la puissance électrique totale mesurée audit module de commande pour chaque véhicule à recharger, ledit module de commande pour chaque véhicule à recharger étant adapté à déterminer une consigne de la puissance électrique de recharge dudit véhicule à partir de l'état de charge du véhicule, de la durée de recharge du véhicule et de la différence entre la puissance électrique totale souhaitée et la puissance électrique totale mesurée.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon partielle et schématique, un mode de réalisation d'un dispositif de recharge de véhicules électriques ou hybrides rechargeables ;
la figure 2 représente, de façon plus détaillée, une partie de la figure 1 ;
la figure 3 représente, sous la forme d'un schéma-bloc, un mode de réalisation d'un procédé de recharge d'un véhicule électrique ou hybride rechargeable ;
les figures 4, 5, 6A et 6B représentent des courbes d'évolution de fonctions d'appartenance d'ensembles flous, respectivement des variables état de charge, durée de recharge et coefficient k de variation de la puissance électrique de recharge pour deux modes de fonctionnement, mises en oeuvre par un mode de réalisation d'un procédé de recharge de véhicules électriques ou hybrides rechargeables ;
les figures 7 et 8 représentent des exemples de surfaces tridimensionnelles d'évolution du coefficient k en fonction de l'état de charge et de la durée de recharge pour deux configurations de variation de la puissance électrique totale disponible ;
les figures 9 et 10 illustrent le principe de détermination du coefficient k pour deux exemples de variation de la puissance électrique disponible ;
les figures 11A, 11B et 11C représentent des courbes d'évolution respectivement des états de charge de véhicules à recharger, de la puissance électrique fournie à chaque véhicule et de la puissance électrique totale fournie aux véhicules en l'absence de commande de la puissance électrique fournie à chaque véhicule ; et
les figures 12A, 12B et 12C, 13A, 13B et 13C, 14A, 14B et 14C, 15A, 15B et 15C et 16A, 16B et 16C représentent des courbes analogues respectivement aux courbes des figures 11A, 11B et 11C pour différents exemples de mise en oeuvre d'un mode de réalisation d'un procédé de recharge.

Par souci de clarté, de mêmes éléments ont été désignés par de mêmes références aux différentes figures.

### Description détaillée

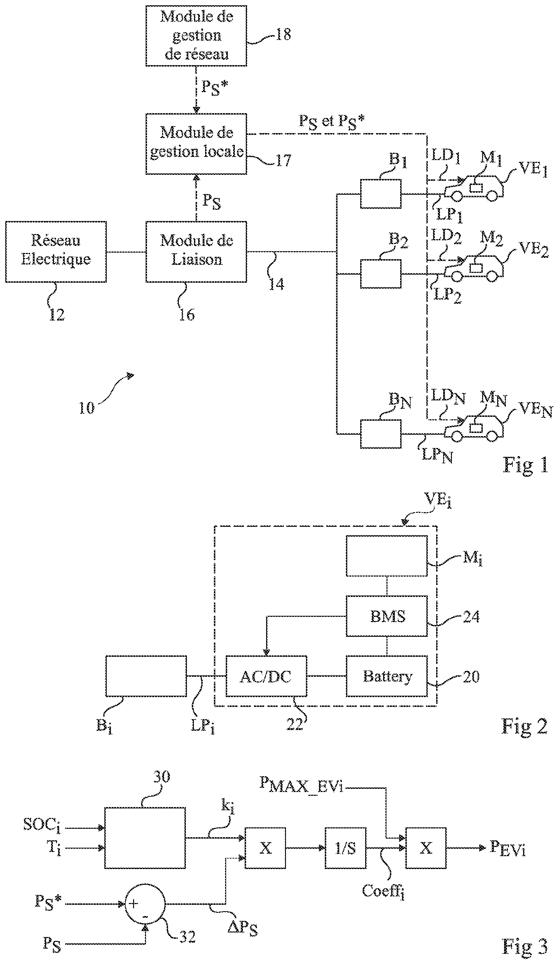

La figure 1 représente un mode de réalisation d'un dispositif 10 de recharge d'une flotte de N véhicules électriques ou hybrides rechargeables VEᵢ où i est un nombre entier variant entre 1 et N. A titre d'exemple, N peut varier de 10 à 100 véhicules en recharge.

Le dispositif 10 est connecté à un réseau de distribution électrique principal 12. Le dispositif 10 comprend un réseau de distribution électrique local 14 relié au réseau principal 12 par un module de liaison 16. Le réseau de distribution électrique local 14 est adapté à transmettre de l'énergie électrique à N bornes de recharge Bi, i variant de 1 à N. Le module de liaison 16 peut comprendre un transformateur, par exemple adapté à fournir une puissance électrique pouvant varier de 200 kW et 2000 kW. Le module de liaison 16 comprend, en outre, un capteur adapté à mesurer la puissance électrique totale P_{S} fournie par le réseau de distribution électrique principal 12 au réseau de distribution électrique local 14.

Un véhicule électrique ou hybride rechargeable VEᵢ peut être connecté à l'une des bornes de recharge Bᵢ pour être rechargé par une liaison LPᵢ de transmission de puissance électrique. A titre d'exemple, la liaison LPᵢ correspond à un câble de transmission de puissance. A titre de variante, la transmission de puissance électrique au véhicule électrique VEᵢ peut être réalisée à distance, par exemple par induction. Dans le présent mode de réalisation, chaque véhicule électrique VEᵢ comprend un module de commande Mᵢ adapté à commander une opération de recharge du véhicule électrique VEᵢ. Chaque module de commande Mᵢ peut comprendre un processeur et/ou un circuit électronique dédié.

Le dispositif 10 comprend un module de gestion locale 17 qui est adapté à recevoir des données représentatives de la puissance électrique totale P_{S} mesurée fournies par le module de liaison 16 et est adapté à transmettre au module de commande Mᵢ de chaque véhicule VEᵢ les données représentatives de la puissance électrique totale P_{S} mesurée par une liaison de transmission de données LDᵢ, i variant de 1 à N. Il peut s'agir d'une liaison filaire ou d'une liaison sans fil. La liaison LDᵢ peut correspondre à une liaison du type RS 232 ou du type de RS 485 sur laquelle sont transmises des données selon un protocole de communication, par exemple le protocole Modbus. La transmission des données représentatives de la puissance électrique totale mesurée P_{S} du module de gestion locale 17 aux modules de commande Mᵢ peut être réalisée à intervalles réguliers.

Un module de gestion de réseau 18 est adapté à transmettre au module de gestion locale 17 des données représentatives d'une puissance électrique P_{S}^{*}, appelée puissance électrique de référence, et correspondant à la puissance électrique totale souhaitée à utiliser pour la recharge des véhicules VEᵢ. Le module de gestion locale 17 est adapté à transmettre les données représentatives d'une puissance électrique P_{S}^{*} au module de commande Mᵢ de chaque véhicule VEi par la liaison de communication LDᵢ correspondante. Une nouvelle valeur de la puissance de référence P_{S}^{*} peut être transmise seulement lorsque cette puissance évolue. Selon un exemple, la puissance de référence P_{S}^{*} peut évoluer par paliers et une nouvelle valeur de la puissance de référence P_{S}^{*} est transmise par le module de gestion locale 17 aux modules de commande Mᵢ seulement au début de chaque nouveau palier. Selon un autre exemple, la puissance de référence P_{S}^{*} évolue de façon continue.

La figure 2 représente un mode de réalisation plus détaillé de certains éléments du véhicule électrique VEᵢ. Chaque véhicule électrique VEᵢ comprend une batterie d'accumulateurs 20 (Battery) destinée à alimenter des équipements, non représentés du véhicule VEᵢ. La batterie 20 est reliée à un convertisseur alternatif/continu 22 (AC/DC) qui, lors de la recharge de la batterie, est relié à la borne Bi par la liaison LPᵢ de transmission de puissance. Chaque véhicule VEᵢ comprend un système de contrôle de batterie 24 (BMS) qui est adapté, notamment, à commander la puissance fournie par le convertisseur 22 à la batterie 20 lors d'une opération de charge de la batterie 20. Le module de commande Mᵢ est adapté à transmettre une consigne de puissance au système de contrôle de batterie 24 à partir de laquelle le système de contrôle de batterie 24 commande le convertisseur 22. A titre de variante, le module de commande Mᵢ peut être prévu au niveau de chaque borne de recharge Bᵢ. Dans ce cas, le module de commande Mᵢ est adapté à échanger des données avec le système de contrôle de batterie 24, par exemple par une liaison filaire ou par une liaison sans fil.

Lorsqu'un véhicule VEᵢ est connecté à la borne Bᵢ, il est fourni au module de commande Mᵢ l'instant de départ prévu tₛₜₒₚᵢ. Selon un exemple, l'utilisateur du véhicule VEᵢ saisit cette donnée sur un module d'interface du véhicule VEi comprenant par exemple un clavier, un écran tactile, un microphone, etc. L'instant au début de la recharge tₛₜₐᵣₜᵢ du véhicule VEᵢ est identifié de manière automatique par le module de commande Mᵢ.

Le module de commande Mᵢ récupère une fois au début de la recharge de manière interne la puissance maximale P_{MAX_EVi} à laquelle peut être chargée la batterie du véhicule VEᵢ.

Au cours de la recharge du véhicule VEᵢ, des données représentatives de l'état de charge SOCᵢ du véhicule sont régulièrement transmises au module de commande Mᵢ du véhicule VEᵢ. A titre de variante, des données représentatives de l'état de charge SOCᵢ du véhicule sont transmises au module de commande Mᵢ seulement au début de la recharge, le module de commande déterminant l'évolution de l'état de charge SOCᵢ du véhicule VEᵢ à partir de la puissance électrique fournie pour recharger le véhicule VEᵢ. Ces données relatives à l'état de charge SOCᵢ et à la puissance maximale P_{MAX_EVi} sont transmises au module de commande Mᵢ sans intervention de l'utilisateur.

Selon un mode de réalisation, le module de commande Mᵢ peut fonctionner selon un mode de fonctionnement de base dans lequel il n'effectue pas de régulation de la puissance électrique à fournir pour la recharge du véhicule VEᵢ. Dans ce cas, la puissance fournie à chaque véhicule est, par exemple, égale à la puissance maximale P_{MAX_EVi}.

Selon un mode de réalisation, le module de commande Mᵢ peut fonctionner selon un mode de fonctionnement de régulation dans lequel il détermine en temps réel une consigne P_{EVi}, par exemple au système de contrôle de batterie 24, de la puissance électrique à fournir pour la recharge du véhicule VEᵢ.

La figure 3 représente, sous la forme d'un schéma-bloc, un mode de réalisation du procédé mis en oeuvre par le module de commande Mᵢ en mode de régulation. Le module de commande Mᵢ comprend un module de détermination 30 d'un coefficient de correction kᵢ. Le module 30 reçoit l'état de charge SOCᵢ du véhicule et la durée Ti pendant laquelle le véhicule VEᵢ va rester en recharge. L'état de charge SOCᵢ correspond à l'état de charge du véhicule VEᵢ lorsque la détermination d'une nouvelle valeur du coefficient ki est effectuée. La durée Ti correspond à la différence entre l'instant tₛₜₒₚᵢ et l'instant de début de la recharge tₛₜₐᵣₜᵢ. Le module de commande Mᵢ comprend un soustracteur 32 recevant les puissances électriques P_{S}^{*} et P_{S} et déterminant la différence ΔP_{S} entre les puissances électriques P_{S}^{*} et P_{S}.

Un coefficient de pondération Coeffi est déterminé à partir du coefficient kᵢ et de la différence ΔP_{S}. A titre d'exemple, il s'agit d'une régulation du type intégrale dans laquelle la différence ΔP_{S} est multipliée par le coefficient ki et est intégrée. A titre de variante, il peut s'agir d'une correction du type proportionnelle-intégrale-dérivée.

La consigne de puissance P_{EVi} correspond au produit de la valeur de la puissance maximale P_{MAX_EVi} et du coefficient Coeffᵢ.

Le procédé de commande peut être mis en oeuvre par l'exécution d'une suite d'instructions par un processeur. A titre de variante, il peut être mis en oeuvre par un circuit électronique dédié.

Selon un mode de réalisation, pour chaque module de commande Mᵢ, le coefficient kᵢ est déterminé par logique floue. Dans ce but, les variables utilisées par le module de commande Mᵢ sont l'état de charge SOC, la durée de recharge T et le coefficient de correction k.

A la variable "état de charge", SOC, sont associés plusieurs ensembles flous, par exemple cinq dans le présent mode de réalisation, correspondant à plusieurs niveaux d'état de charge de la batterie du véhicule VEᵢ.

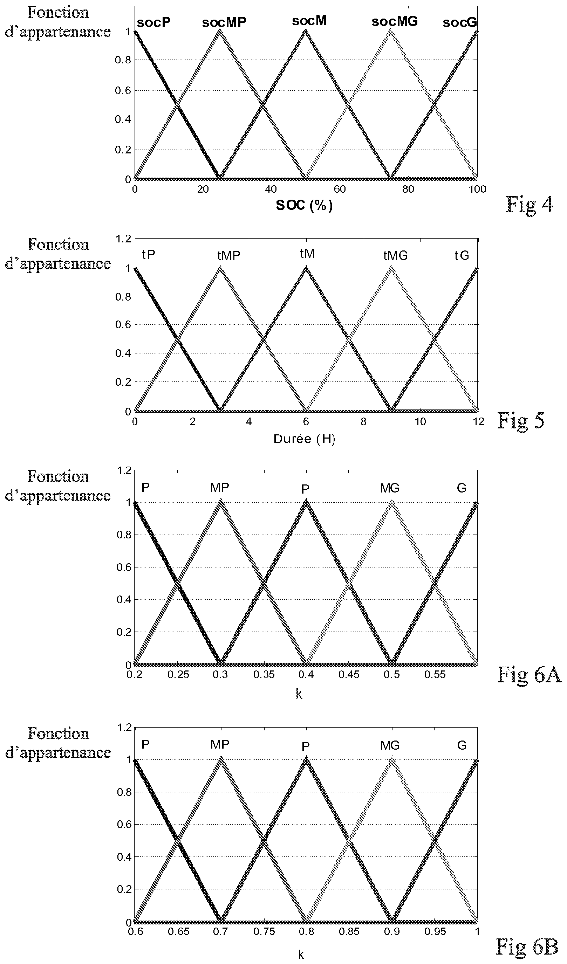

La figure 4 représente des exemples de fonctions d'appartenance qui caractérisent cinq ensembles flous socP, socMP, socM, socMG et socG de la variable SOC traduisant respectivement le fait que l'état de charge est autour de 0 %, 25 %, 50 %, 75 % et 100 %.

A la variable "durée de recharge", T, sont associés plusieurs ensembles flous, par exemple cinq dans le présent mode de réalisation, correspondant à plusieurs plages de valeurs de la durée de recharge.

La figure 5 représente des exemples de fonctions d'appartenance qui caractérisent cinq ensembles flous tP, tMP, tM, tMG et tG de la variable SOC traduisant respectivement le fait que la durée de recharge est autour de 0 h, 3 h, 6 h, 9 h et 12 h.

A la variable "coefficient de correction", k, sont associés plusieurs ensembles flous, par exemple cinq dans le présent mode de réalisation, correspondant à plusieurs plages de valeurs du coefficient de correction.

Selon un mode de réalisation, le coefficient ki est déterminé de façon différente dans le cas d'une diminution ou d'une augmentation de la puissance électrique totale de référence P_{S}^{*}.

Les figures 6A et 6B représentent, respectivement dans le cas d'une diminution de la puissance P_{S}* et d'une augmentation de la puissance P_{S}*, des exemples de fonctions d'appartenance qui caractérisent cinq ensembles flous P, MP, M, MG et G de la variable k traduisant respectivement le fait que le coefficient de correction est "faible", "moyennement faible", "moyen", "moyennement élevé" et "élevé".

Les fonctions d'appartenance des ensembles flous des variables "état de charge", "durée de recharge" et "coefficient de correction" peuvent être stockées dans des mémoires de chaque module de commande Mᵢ.

Sur les figures 4, 5, 6A et 6B les fonctions d'appartenance correspondent à des lignes brisées. Toutefois, les fonctions d'appartenance peuvent avoir une autre forme, par exemple une forme en cloche.

Un exemple de matrice de décision, ou table d'inférence, dans le cas d'une diminution de la puissance P_{S}* est donné par le tableau (1) suivant :

**Tableau (1)**

| | | Etat de charge SOC | | | | |
|---|---|---|---|---|---|---|
| | | socP | socMP | socM | socMG | socG |
| Durée de recharge T | tP | P | P | MP | M | MG |
| | tMP | P | MP | MP | MG | G |
| | tM | P | MP | M | MG | G |
| | tMG | MP | M | M | MG | G |
| | tG | MP | M | MG | G | G |

En cas de diminution de la puissance P_{S}^{*}, la fonction d'appartenance de la variable k représentée en figure 6A est utilisée.

La lecture de la règle floue correspondant, par exemple, à la première case en haut à gauche de la table d'inférence (1) est la suivante : si l'état de charge est faible (socP) et si la durée de recharge est faible (tP), alors le coefficient k est faible (P). Ceci signifie que la variable k appartient à l'ensemble flou P à un degré qui dépend du degré de validité des prémisses, autrement dit du degré d'appartenance de la variable SOC à l'ensemble flou socP et du degré d'appartenance de la variable T à l'ensemble flou tP.

Le tableau (1) n'est pas symétrique. Ceci illustre le fait que le coefficient kᵢ est faible en priorité dès que l'état de charge est faible. En effet, l'objectif est que l'état de charge soit à 100 % au moment où le véhicule électrique est déconnecté de la borne de recharge associée.

Un exemple de la table d'inférence dans le cas d'une augmentation de la puissance P_{S}^{*} est donné par le tableau (2) suivant :

**Tableau (2)**

| | | Etat de charge SOC | | | | |
|---|---|---|---|---|---|---|
| | | socP | socMP | socM | socMG | socG |
| Durée de recharge T | tP | G | G | MG | M | MP |
| | tMP | G | MG | MG | MP | P |
| | tM | G | MG | M | MP | P |
| | tMG | MG | M | M | MP | P |
| | tG | MG | M | MP | P | P |

En cas d'augmentation de la puissance PS*, la fonction d'appartenance de la variable k représentée en figure 6B est utilisée.

La lecture de la règle floue correspondant, par exemple, à la première case en haut à gauche de la table d'inférence (2) est la suivante : si l'état de charge est faible (socP) et si la durée de recharge est faible (tP), alors le coefficient k est élevé (G). Ceci signifie que la variable k appartient à l'ensemble flou G à un degré qui dépend du degré de validité des prémisses, autrement dit du degré d'appartenance de la variable SOC à l'ensemble flou socP et du degré d'appartenance de la variable T à l'ensemble flou tP.

Le tableau (2) n'est pas symétrique. Ceci illustre le fait que le coefficient ki est élevé en priorité dès que l'état de charge est faible. En effet, l'objectif est que l'état de charge soit à 100 % au moment où le véhicule électrique est déconnecté de la borne de recharge.

En logique floue, la conjonction de coordination "et" qui relie les prémisses se traduit par un opérateur flou et le mot de liaison "alors" qui relie la conclusion aux prémisses se traduit par une implication floue.

A titre d'exemple, les opérateurs flous de Zadeh peuvent être utilisés. L'opérateur intersection ET reliant deux ensembles flous renvoie alors le minimum des fonctions d'appartenance des deux ensembles flous.

De façon générale, l'implication floue définit comment délimiter, en fonction des valeurs précises des variables SOC et T des prémisses de la règle floue, une portion de la surface sous la courbe de la fonction d'appartenance de l'ensemble flou de la conclusion de la règle floue, c'est-à-dire à l'obtention d'un sous-ensemble.

A titre d'exemple, l'implication floue utilisée peut être l'implication de Mamdani ou l'implication de Larsen.

Pour des valeurs précises SOCᵢ et Ti des variables SOC et T, chaque règle floue de la table d'inférence conduit à l'obtention d'un sous-ensemble, éventuellement nul, pour la variable k. Ces sous-ensembles sont agrégés en utilisant, par exemple, l'opérateur MAX. La détermination de la valeur finale du coefficient ki à partir des sous-ensembles agrégés s'appelle la défuzzification. A titre d'exemple, l'étape de défuzzification met en oeuvre la méthode moyenne des maxima ou la méthode du centre de gravité.

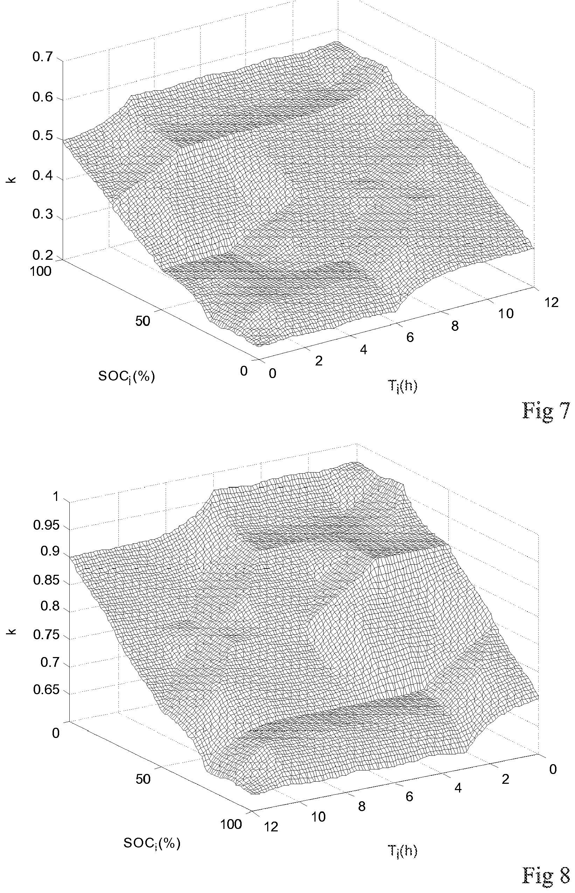

Les figures 7 et 8 représentent un exemple de représentation tridimensionnelle de l'évolution du coefficient ki en fonction de l'état de charge SOCᵢ et la durée de recharge Ti lors de la mise en oeuvre respectivement de la table d'inférence (1) et de la table d'inférence (2) en utilisant l'opérateur flou "ET" de Zadeh, l'implication floue de Mamdani et l'étape de défuzzification par la méthode du centre de gravité.

A titre d'illustration, il est considéré deux véhicules VE₁ et VE₂. L'état de charge SOC₁ du véhicule VE₁ est supérieur à l'état de charge SOC₂ du véhicule VE₂ et la durée de charge T₁ du véhicule VE₁ est supérieure à la durée de charge T₂ du véhicule VE₂.

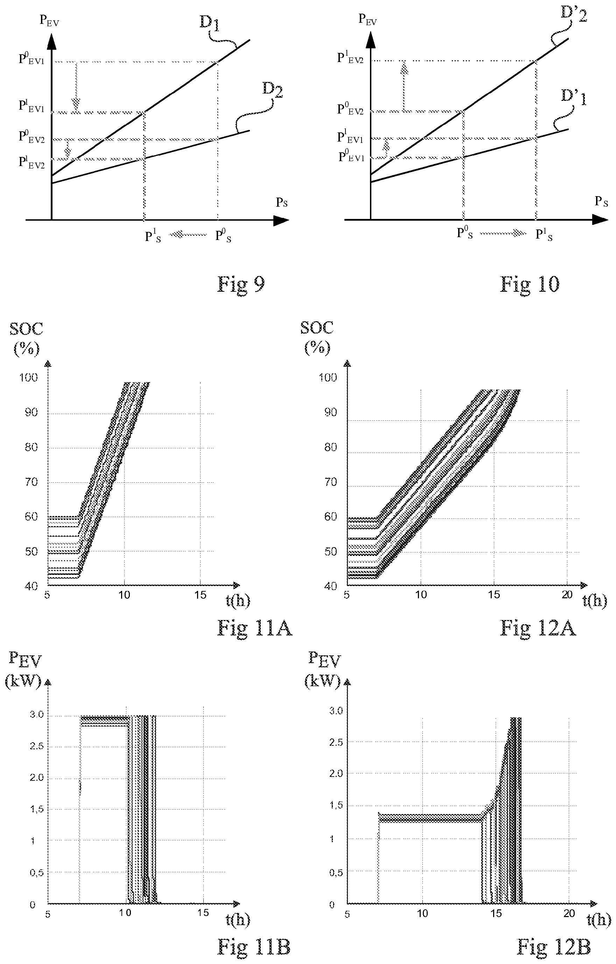

La figure 9 représente des courbes d'évolution D₁ et D₂ de la puissance électrique P_{EV1} fournie au véhicule VE₁ et de la puissance électrique P_{EV2} fournie au véhicule VE₂ en fonction de la puissance électrique totale disponible P_{S} respectivement lorsqu'une diminution de la puissance totale disponible de P⁰_{S} à P¹_{S} est indiquée par le module de gestion de réseau 18 aux bornes Bᵢ, i variant de 1 à N. Les courbes D₁ et D₂ correspondent à des droites, le coefficient k₁ correspondant à la pente de la droite D₁ et le coefficient k₂ correspondant à la pente de la droite D₂.

La figure 9 montre que, lors d'une diminution de la puissance électrique totale disponible, la diminution de la puissance électrique fournie à un véhicule est d'autant plus importante que son état de charge et la durée de recharge sont élevées.

La figure 10 représente des courbes d'évolution D'₁ et D'₂ analogues aux droites respectivement D₁ et D₂ lorsqu'une augmentation de la puissance totale disponible de P⁰_{S} à P¹_{S} est indiquée par le module de gestion de réseau 18 aux modules de commande Mᵢ, i variant de 1 à N.

La figure 10 montre que, lors d'une augmentation de la puissance électrique totale disponible, l'augmentation de la puissance électrique fournie à un véhicule est d'autant plus importante que son état de charge et la durée de recharge sont faibles.

Un avantage du présent mode de réalisation est qu'il est essentiellement réalisé localement par chaque module de commande du véhicule électrique et ne requiert la transmission à distance que d'un nombre réduit de données.

Un autre avantage du présent mode de réalisation est qu'il ne requiert pas d'informations pouvant être difficiles à obtenir, par exemple le type du véhicule à recharger.

Un autre avantage du présent mode de réalisation est qu'il ne nécessite pas de connaître à l'avance le nombre de véhicules à recharger ou les instants d'arrivée des véhicules à recharger.

Un autre avantage du présent mode de réalisation est qu'il peut être mis en oeuvre en temps réel.

Un autre avantage du présent mode de réalisation est que la consigne de la puissance électrique P_{VEi} fournie par le module de commande Mᵢ de chaque véhicule VEᵢ peut être déterminée de façon continue de sorte que la puissance totale électrique P_{S} fournie à l'ensemble des véhicules électriques peut suivre en continu la puissance de référence P_{S}^{*}.

Un autre avantage du présent mode de réalisation est que la puissance de référence P_{S}^{*} n'a pas à être déterminée à l'avance. De ce fait, la puissance de référence P_{S}^{*} peut suivre la puissance électrique fournie par une centrale électrique, notamment une centrale photovoltaïque, une éolienne, une centrale hydraulique ou une usine marémotrice.

Des simulations ont été réalisées par les inventeurs. Pour toutes ces simulations, il a été considéré vingt véhicules électriques ayant chacun une batterie ayant une capacité de 24 KWh avec une puissance maximale de recharge de 3 kW.

Pour la première simulation, l'état de charge initial SOCᵢₙᵢ des véhicules électriques était compris entre 40 % et 60 % et a été obtenu par un tirage aléatoire selon une loi uniforme. L'instant de début de la recharge tₛₜₐᵣₜ était 7 h pour tous les véhicules et l'instant de fin tₛₜₒₚ de la recharge était compris entre 16,5 h et 19 h et a été obtenu par un tirage aléatoire. Ces valeurs sont rassemblées dans le tableau (3) ci-dessous :

**Tableau (3)**

| VE | tₛₜₐᵣₜ (h) | tₛₜₒₚ (h) | SOCᵢₙᵢ (%) |
|---|---|---|---|
| 1 | 7 | 18,6 | 45 |
| 2 | 7 | 18,0 | 50 |
| 3 | 7 | 17,9 | 54 |
| 4 | 7 | 18,8 | 58 |
| 5 | 7 | 17,2 | 60 |
| 6 | 7 | 18,4 | 51 |
| 7 | 7 | 18,4 | 42 |
| 8 | 7 | 17,5 | 43 |
| 9 | 7 | 17,9 | 45 |
| 10 | 7 | 16,7 | 57 |
| 11 | 7 | 16,6 | 45 |
| 12 | 7 | 17,8 | 57 |
| 13 | 7 | 18,4 | 45 |
| 14 | 7 | 18,8 | 59 |
| 15 | 7 | 16,8 | 47 |
| 16 | 7 | 17,9 | 44 |
| 17 | 7 | 17,7 | 45 |
| 18 | 7 | 16,5 | 52 |
| 19 | 7 | 17,3 | 49 |
| 20 | 7 | 16,9 | 47 |

Pour la première simulation, il n'y a pas de détermination de consigne de puissance de recharge, chaque véhicule étant rechargé à la puissance maximale de recharge.

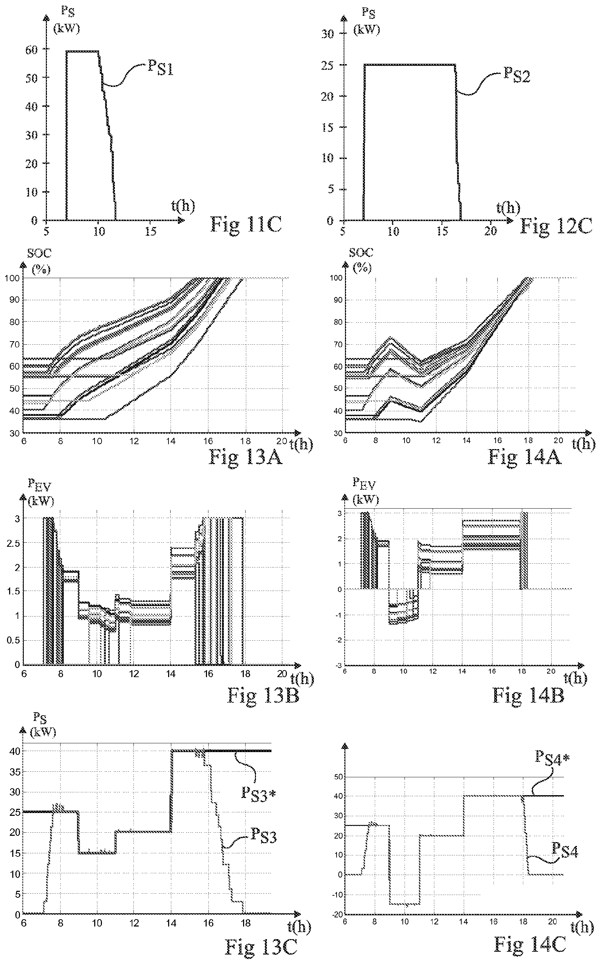

Les figures 11A, 11B et 11C représentent des courbes d'évolution respectivement des états de charge SOC des véhicules électriques, de la puissance électrique P_{EV} fournie à chaque véhicule électrique et de la puissance électrique totale P_{S1} fournie aux véhicules électriques pour la première simulation.

Comme cela apparaît sur ces figures, chaque véhicule a été rechargé avec la puissance maximale de recharge de 3 kW pendant toute la durée de la recharge. La puissance électrique totale P_{S1} s'élevait donc à 60 kW tant que tous les véhicules sont en recharge puis diminuait jusqu'à 0 kW au fur et à mesure que l'état de charge de chaque véhicule atteint 100 %.

Une deuxième simulation a été réalisée avec les mêmes conditions que la première simulation à la différence que la puissance totale de référence à partir de 7 h était de 25 kW.

Les figures 12A, 12B et 12C sont des courbes analogues aux courbes respectivement des figures 11A, 11B et 11C pour la deuxième simulation. La puissance totale fournie P_{S2} a été maintenue à 25 kW et l'état de charge de la totalité des véhicules était de 100 % au moment du départ.

Une troisième simulation a été réalisée avec les mêmes conditions que la deuxième simulation à la différence que l'instant de début de la recharge tₛₜₐᵣₜ était compris entre 7 h et 12 h et a été obtenu par un tirage aléatoire et que la puissance totale de référence P^{*}_{S3} était successivement de 25 kW de 0 h à 9 h, de 15 kW de 9 h à 11 h, de 20 kW de 11 h à 14 h et de 40 kW de 14 h à 24 h. Une nouvelle valeur de la puissance totale de référence P^{*}_{S3} était donc transmise à chaque borne de recharge à 0 h, 9 h, 11 h et 14 h.

Les figures 13A, 13B et 13C sont des courbes analogues aux courbes respectivement des figures 11A, 11B et 11C pour la troisième simulation. En figure 13C, on a représenté, en plus de la puissance totale P_{S3}, la courbe d'évolution de la puissance totale de référence P^{*}_{S3} par une ligne en trait épais. La puissance totale fournie P_{S3} suit la courbe d'évolution de la puissance totale de référence P^{*}_{S3} et l'état de charge de la totalité des véhicules était de 100 % au moment du départ.

Une quatrième simulation a été réalisée dans le cas où les véhicules électriques sont, en outre, adaptés à fournir de l'énergie électrique au réseau électrique principal. La quatrième simulation a été réalisée avec les mêmes conditions que la troisième simulation à la différence que la puissance totale de référence P^{*}_{S4} était successivement de 25 kW de 0 h à 9 h, de - 15 kW de 9 h à 11 h, de 20 kW de 11 h à 14 h et de 40 kW de 14 h à 24 h. Une nouvelle valeur de la puissance totale de référence P^{*}_{S4} était donc transmise à chaque borne de recharge à 0 h, 9 h, 11 h et 14 h.

Les figures 14A, 14B et 14C sont des courbes analogues aux courbes respectivement des figures 11A, 11B et 11C pour la quatrième simulation. En figure 14C, on a représenté, en plus de la puissance totale P_{S4}, la courbe d'évolution de la puissance totale de référence P^{*}_{S4} par une ligne en trait épais. La puissance totale fournie P_{S4} suit la courbe d'évolution de la puissance totale de référence P^{*}_{S4} et l'état de charge de la totalité des véhicules était de 100 % au moment du départ.

Une cinquième simulation a été réalisée en l'absence de commande. Pour la cinquième simulation, l'état de charge initial SOCᵢₙᵢ des véhicules électriques était compris entre 20 % et 80 % et a été obtenu par un tirage aléatoire selon une loi uniforme. L'instant de début de la recharge tₛₜₐᵣₜ était compris entre 7 h et 12 h et a été obtenu par un tirage aléatoire et l'instant de fin tₛₜₒₚ de la recharge était compris entre 19 h et 21 h et a été obtenu par un tirage aléatoire. Ces valeurs sont rassemblées dans le tableau (4) ci-dessous :

**Tableau (4)**

| VE | tₛₜₐᵣₜ (h) | tₛₜₒₚ (h) | SOCᵢₙᵢ (%) |
|---|---|---|---|
| 1 | 8,02 | 20,5 | 54,67 |
| 2 | 7,97 | 19,5 | 36,07 |
| 3 | 8,85 | 20 | 60,47 |
| 4 | 10,22 | 20,38 | 63,02 |
| 5 | 11,17 | 20,77 | 55,36 |
| 6 | 8,12 | 20,92 | 57,73 |
| 7 | 8,95 | 20,08 | 57,29 |
| 8 | 8,65 | 19,27 | 46,77 |
| 9 | 7,52 | 19,28 | 54,66 |
| 10 | 8,47 | 19,5 | 40,14 |
| 11 | 8,18 | 20,67 | 56,18 |
| 12 | 10,4 | 19,5 | 35,95 |
| 13 | 8,43 | 20,62 | 43,31 |
| 14 | 8,83 | 19,48 | 36,39 |
| 15 | 8,18 | 20,58 | 37,91 |
| 16 | 9,08 | 19,68 | 59,7 |
| 17 | 8,37 | 19,38 | 55,84 |
| 18 | 9,58 | 19,5 | 44,51 |
| 19 | 10,68 | 20,22 | 63,51 |
| 20 | 11,8 | 19,93 | 56,03 |

Pour la cinquième simulation, il n'y a pas de détermination de consigne de puissance de recharge, chaque véhicule étant rechargé à la puissance maximale de recharge.

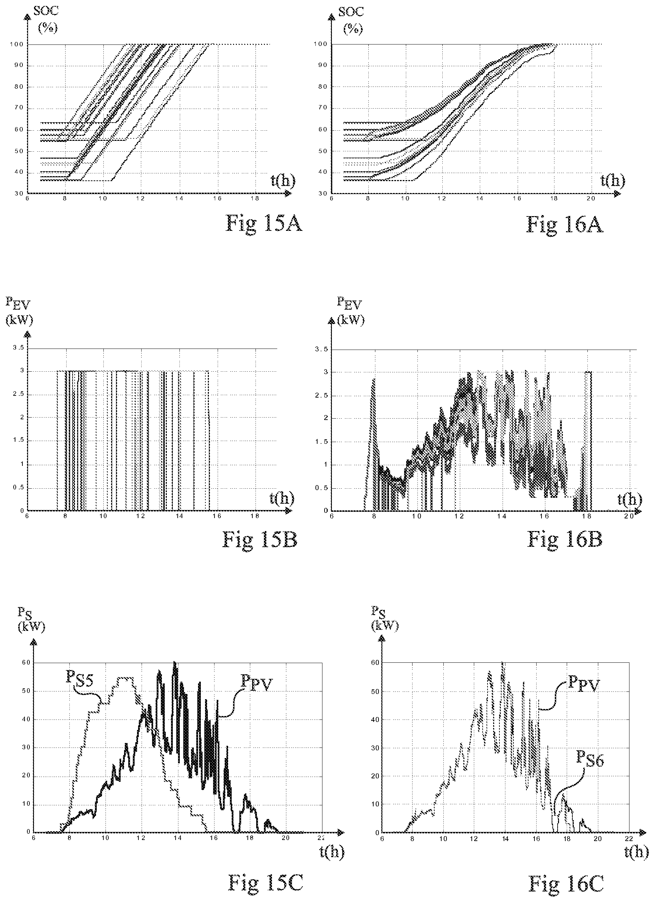

Les figures 15A, 15B et 15C sont des courbes analogues aux courbes respectivement des figures 11A, 11B et 11C pour la cinquième simulation. En figure 15C, la courbe P_{S5} représente la courbe d'évolution de la puissance électrique totale et la courbe P_{PV} représente la puissance électrique fournie par une centrale photovoltaïque.

Pour la cinquième simulation, le taux de couverture solaire est de 55,62 %, c'est-à-dire que 55,62 % de la puissance électrique totale P_{S} fournie aux véhicules à recharger a été fournie par la centrale photovoltaïque.

Une sixième simulation a été réalisée avec les mêmes conditions que la cinquième simulation à la différence que la consigne de puissance totale disponible P^{*}_{S} correspond à la puissance électrique P_{PV} représentée en figure 15C.

Les figures 16A, 16B et 16C sont des courbes analogues aux courbes respectivement des figures 11A, 11B et 11C pour la sixième simulation.

Pour la sixième simulation, le taux de couverture solaire est de 97,88 %, c'est-à-dire que 97,88 % de la puissance électrique totale P_{S6} fournie aux véhicules à recharger a été fournie par la centrale photovoltaïque.

Des modes de réalisation particuliers ont été décrits. Diverses variantes et modifications apparaîtront à l'homme de l'art.

## Revendications

1. Procédé de recharge de véhicules électriques (VEᵢ) ou hybrides par des bornes de recharge (Bᵢ) reliées à un réseau de distribution électrique (14), le procédé comprenant les étapes suivantes :
fourniture, pour chaque véhicule à recharger, à un module de commande (Mᵢ) intégré audit véhicule ou à la borne de recharge dudit véhicule, de données représentatives d'une puissance électrique totale souhaitée (P_{S}*) pour la recharge des véhicules ;
mesure de la puissance électrique totale (P_{S}) fournie par le réseau de distribution électrique (14) pour la recharge des véhicules et fourniture de données représentatives de la puissance électrique totale mesurée audit module de commande pour chaque véhicule à recharger ; et
détermination, par ledit module de commande (Mᵢ) pour chaque véhicule à recharger, d'un premier coefficient (kᵢ) par logique floue à partir de l'état de charge (SOCᵢ) du véhicule et de la durée de recharge (Tᵢ) du véhicule et détermination d'une consigne (P_{EVi}) de la puissance électrique de recharge dudit véhicule à partir du premier coefficient et à partir de la différence (ΔP_{S}) entre la puissance électrique totale souhaitée (P_{S}^{*}) et la puissance électrique totale mesurée (P_{S}).

2. Procédé selon la revendication 1, dans lequel la consigne (P_{EVi}) de la puissance électrique de recharge dudit véhicule est, en outre, déterminée à partir de l'état de charge (SOCᵢ) du véhicule, de la durée de recharge (Tᵢ) du véhicule.

3. Procédé selon la revendication 1 ou 2, dans lequel les données représentatives de la puissance électrique totale souhaitée (P_{S}^{*}) sont fournies par le gestionnaire du réseau (18) et/ou par au moins une centrale électrique sélectionnée parmi le groupe comprenant une centrale photovoltaïque, une centrale éolienne, une centrale hydraulique ou une usine marémotrice.

4. Procédé de commande selon la revendication 1, comprenant, en outre, l'étape de multiplication de la puissance électrique de charge maximale (P_{MAX_EVi}) dudit véhicule (P_{EVi}) par un deuxième coefficient (Coeffᵢ) obtenu à partir du premier coefficient (kᵢ) et de la puissance électrique totale mesurée (P_{S}).

5. Procédé de commande selon la revendication 4, comprenant les étapes suivantes :
- déterminer la différence (ΔP_{S}) entre la puissance électrique totale souhaitée (P_{S}^{*}) et la puissance électrique totale mesurée (P_{S}) ; et
- déterminer le deuxième coefficient (Coeffi) à partir du produit entre le premier coefficient (kᵢ) et ladite différence.

6. Procédé de commande selon la revendication 5, dans lequel le deuxième coefficient (Coeffᵢ) est égal à l'intégrale du produit entre le premier coefficient (kᵢ) et ladite différence (ΔP_{S}).

7. Procédé de commande selon l'une des revendications 1 à 6, dans lequel la détermination du premier coefficient (kᵢ) par logique floue comprend la détermination de premières valeurs de premières fonctions d'appartenance de premiers ensembles flous associés à l'état de charge du véhicule et de deuxièmes valeurs de deuxièmes fonctions d'appartenance de deuxièmes ensembles flous associés à la durée de recharge (Tᵢ) du véhicule.

8. Procédé de commande selon la revendication 7, dans lequel la détermination du premier coefficient (kᵢ) par logique floue comprend l'utilisation d'une première table d'inférence et d'une troisième fonction d'appartenance pour le premier coefficient lors d'une diminution de la puissance électrique totale souhaitée (P_{S}^{*}) et d'une deuxième table d'inférence, différente de la première table d'inférence, et d'une quatrième fonction d'appartenance pour le premier coefficient différente de la troisième fonction d'appartenance, lors d'une augmentation de la puissance électrique totale souhaitée.

9. Dispositif (10) de recharge -de véhicules électriques (VE₁, VE₂, VE_{N}) ou hybrides, comprenant des bornes de recharge (B₁, B₂, B_{N}) reliées à un réseau de distribution électrique (14), chaque borne de recharge étant reliée à l'un des véhicules à recharger, le dispositif comprenant, en outre, pour chaque véhicule à recharger, un module de commande (Mᵢ) intégré audit véhicule ou à la borne de recharge dudit véhicule, le dispositif comprenant des moyens de transmission (LD₁, LD₂, LD_{N}), au module de commande pour chaque véhicule à recharger, de données représentatives d'une puissance électrique totale souhaitée (P_{S}^{*}) pour la recharge des véhicules, le dispositif comprenant, en outre, un capteur (16) adapté à mesurer la puissance électrique totale (P_{S}) fournie par le réseau de distribution électrique (14) pour la recharge desdits véhicules et des moyens (LD₁, LD₂, LD_{N}) de transmission de données représentatives de la puissance électrique totale mesurée audit module de commande pour chaque véhicule à recharger, ledit module de commande (Mᵢ) pour chaque véhicule à recharger étant adapté à déterminer un premier coefficient (kᵢ) par logique floue à partir de l'état de charge (SOCᵢ) du véhicule et de la durée de recharge (Tᵢ) du véhicule et à déterminer une consigne (P_{EVi}) de la puissance électrique de recharge dudit véhicule à partir du premier coefficient et à partir de l'état de charge (SOCᵢ) du véhicule, de la durée de recharge (Tᵢ) du véhicule et de la différence (ΔP_{S}) entre la puissance électrique totale souhaitée (P_{S}^{*}) et la puissance électrique totale mesurée (P_{S}).

## Patentansprüche

1. Ein Verfahren zum Wiederaufladen von Elektrofahrzeugen (VEᵢ) oder Hybridfahrzeugen mittels Ladestationen (Bᵢ), die mit einem elektrischen Energieversorgungsnetz (14) verbunden sind, wobei das Verfahren die folgenden Schritte aufweist:
Beliefern, für jedes Fahrzeug, das wiederaufgeladen werden soll, eine Steuermoduls (Mᵢ), das in das Fahrzeug oder in die Ladestation des Fahrzeugs eingebaut ist, mit Daten, die für eine gesamte elektrische Leistung (P_{S}^{*}) repräsentativ sind, die für das Wiederaufladen der Fahrzeuge erforderlich ist;
Messen der gesamten elektrischen Leistung (P_{S}), die durch das elektrische Energieversorgungsnetz (14) zum Wiederaufladen der Fahrzeuge geliefert wird und Liefern der Daten, die für die gemessene gesamte elektrische Leistung repräsentativ sind, an das Steuermodul für jedes Fahrzeug, das wiederaufgeladen werden soll; und
Bestimmen, mittels des Steuermoduls (Mᵢ) für jedes Fahrzeug, das wiederaufgeladen werden soll, eines ersten Koeffizienten (kᵢ) durch Fuzzy-Logic basierend auf dem Ladungszustand (SOCᵢ) des Fahrzeugs und auf der Wiederaufladungszeit (Tᵢ) des Fahrzeugs und Bestimmen einer Einstellung (P_{EVi}) der elektrischen Ladeleistung des Fahrzeugs basierend auf dem ersten Koeffizienten und basierend auf der Differenz (ΔP_{S}) zwischen der erforderlichen gesamten elektrischen Leistung (P_{S}^{*}) und der gemessenen gesamten elektrischen Leistung (P_{S}).

2. Verfahren nach Anspruch 1, wobei die Einstellung (P_{EVi}) der elektrischen Ladeleistung des Fahrzeuges weiter bestimmt wird basierend auf dem Ladezustand (SOCᵢ) des Fahrzeugs, auf der Wiederaufladungszeit (Tᵢ) des Fahrzeugs.

3. Verfahren nach Anspruch 1 oder 2, wobei die Daten, die für die erforderliche gesamte elektrische Leistung (P_{S}^{*}) repräsentativ sind, durch den Energieversorgungsnetzmanager (18) und/oder durch wenigstens ein elektrisches Kraftwerk vorgesehen werden, das aus der Gruppe ausgewählt ist, die Folgendes aufweist: ein Photovoltaik-Kraftwert, eine Windkraftwerk, ein Wasserkraftwert oder ein Gezeitenkraftwerk.

4. Steuerverfahren nach Anspruch 1, das weiter den Schritt des Multiplizierens der maximalen elektrischen Ladeleistung (P_{MAX}__{EVi}) des Fahrzeugs (P_{EVi}) mit einem zweiten Koeffizienten (Coeffᵢ) aufweist, der aus dem ersten Koeffizienten (kᵢ) und aus der gemessenen gesamten elektrischen Leistung (P_{S}) erhalten wird.

5. Steuerverfahren nach Anspruch 4, das die folgenden Schritte aufweist:
- Bestimmen der Differenz (ΔP_{S}) zwischen der erforderlichen gesamten elektrischen Leistung (P_{S}^{*}) und der gemessenen gesamten elektrischen Leistung (P_{S}); und
- Bestimmen des zweiten Koeffizienten (Coeffi) basierend auf dem Produkt zwischen dem ersten Koeffizienten (kᵢ) und der Differenz.

6. Steuerverfahren nach Anspruch 5, wobei der zweite Koeffizient (Coeffi) gleich dem Integral des Produkts zwischen dem ersten Koeffizienten (kᵢ) und der Differenz (ΔP_{S}) ist.

7. Verfahren nach einem der Ansprüche 1 bis 6, wobei die Bestimmung des ersten Koeffizienten (kᵢ) durch Fuzzy-Logic Bestimmen erster Werte erster Zugehörigkeitsfunktionen erster Fuzzy-Sätze, die mit dem Ladezustand des Fahrzeugs assoziiert sind und zweiter Werte zweiter Zugehörigkeitsfunktionen zweiter Fuzzy-Sätze, die mit der Fahrzeugwiederaufladungszeit (Ti) assoziiert sind, aufweist.

8. Verfahren nach Anspruch 7, wobei die Bestimmung des ersten Koeffizienten (kᵢ) durch Fuzzy-Logic Verwenden einer ersten Inferenztabelle und einer dritten Zugehörigkeitsfunktion für den ersten Koeffizienten bei Verringerung der erforderlichen gesamten elektrischen Leistung (P_{S}^{*}) und einer zweiten Inferenztabelle, die sich von der ersten Inferenztabelle unterscheidet, und einer vierten Zugehörigkeitsfunktion für den ersten Koeffizienten, die sich von der dritten Zugehörigkeitsfunktion unterscheidet, bei Erhöhung der erforderlichen gesamten elektrischen Leistung aufweist.

9. Eine Einrichtung (10) zum Wiederaufladen von Elektrofahrzeugen (VE₁, VE₂, VE_{N}) oder Hybridfahrzeugen, die Ladestationen (B₁, B₂, B_{N}) aufweist, die mit einem elektrischen Energieversorgungsnetz (14) verbunden sind, wobei jede Ladestation mit einem der Fahrzeuge verbunden ist, das wiederaufgeladen werden soll, wobei die Vorrichtung weiter für jedes Fahrzeug, das wiederaufgeladen werden soll, ein Steuermodul (Mᵢ) aufweist, das in das Fahrzeug oder in die Ladestation des Fahrzeugs eingebaut ist, wobei die Einrichtung weiter Mittel (LD₁, LD₂, LD_{N}) aufweist zum Senden, an das Steuermodul für jedes Fahrzeug, das wiederaufgeladen werden soll, von Daten, die für eine erforderliche gesamte elektrische Leistung (P_{S}^{*}) zum Wiederaufladen der Fahrzeuge repräsentativ sind, wobei die Einrichtung weiter einen Sensor (16), der in der Lage ist, die gesamte elektrische Leistung (P_{S}) zu messen, die durch das elektrische Energieversorgungsnetz (14) zum Wiederaufladen der Fahrzeuge geliefert wird, und Mittel (LD₁, LD₂, LD_{N}) aufweist zum Senden von Daten, die für die gemessene gesamte elektrische Leistung repräsentativ sind, und zwar an das Steuermodul für jedes Fahrzeug, das wiederaufgeladen werden soll, wobei das Steuermodul (Mᵢ) für jedes Fahrzeug, das wiederaufgeladen werden soll, in der Lage ist, einen ersten Koeffizienten (kᵢ) durch Fuzzy-Logic basierend auf dem Ladezustand (SOCᵢ) des Fahrzeugs und auf der Wiederaufladungszeit (Tᵢ) des Fahrzeugs zu bestimmen und eine Einstellung (P_{EVi}) der elektrischen Leistung zum Wiederaufladen des Fahrzeuges basierend auf dem ersten Koeffizienten und dem Ladezustand (SOCᵢ) des Fahrzeuges, auf der Wiederaufladungszeit (Tᵢ) des Fahrzeugs und auf der Differenz (ΔP_{S}) zwischen der erforderlichen gesamten elektrischen Leistung (P_{S}^{*}) und der gemessenen gesamten elektrischen Leistung (P_{S}) zu bestimmen.

## Claims

1. A method of recharging electric (VEᵢ) or hybrid vehicles by means of charging stations (Bᵢ) connected to an electric power grid (14), the method comprising the steps of:
supplying, for each vehicle to be recharged, a control module (Mᵢ) built into said vehicle or into the charging station of said vehicle with data representative of a total electric power (P_{S}^{*}) required for recharging the vehicles;
measuring the total electric power (P_{S}) supplied by the electric power grid (14) for recharging the vehicles and supplying data representative of the measured total electric power to said control module for each vehicle to be recharged; and
determining, by means of said control module (Mᵢ) for each vehicle to be recharged, a first coefficient (kᵢ) by fuzzy logic based on the state of charge (SOCᵢ) of the vehicle and on the recharge time (Tᵢ) of the vehicle and determining a setting (P_{EVi}) of the electric charge power of said vehicle based on the first coefficient and based on the difference (ΔP_{S}) between the required total electric power (P_{S}^{*}) and the measured total electric power (P_{S}).

2. The method of claim 1, wherein the setting (P_{EVi}) of the electric charge power of said vehicle is further determined based on the state of charge (SOCᵢ) of the vehicle, on the recharge time (Tᵢ) of the vehicle.

3. The method of claim 1 or 2, wherein the data representative of the required total electric power (P_{S}^{*}) are provided by the power grid manager (18) and/or by at least one electric power plant selected from the group comprising a photovoltaic power plant, a wind power station, a hydraulic power plant, or a tidal power station.

4. The control method of claim 1, further comprising the step of multiplying the maximum electric charge power (P_{MAX_EVi}) of said vehicle (P_{EVi}) by a second coefficient (Coeffi) obtained from the first coefficient (kᵢ) and from the measured total electric power (P_{S}).

5. The control method of claim 4, comprising the steps of:
- determining the difference (ΔP_{S}) between the required total electric power (P_{S}^{*}) and the measured total electric power (P_{S}); and
- determining the second coefficient (Coeffᵢ) based on the product between the first coefficient (kᵢ) and said difference.

6. The control method of claim 5, wherein the second coefficient (Coeffi) is equal to the integral of the product between the first coefficient (kᵢ) and said difference (ΔP_{S}).

7. The control method of any of claims 1 to 6, wherein the determination of the first coefficient (kᵢ) by fuzzy logic comprises determining first values of first membership functions of first fuzzy sets associated with the state of charge of the vehicle and second values of second membership functions of second fuzzy sets associated with the vehicle recharge time (Tᵢ).

8. The control method of claim 7, wherein the determination of the first coefficient (kᵢ) by fuzzy logic comprises using a first inference table and a third membership function for the first coefficient on decrease of the required total electric power (P_{S}^{*}) and a second inference table, different from the first inference table, and a fourth membership function for the first coefficient different from the third membership function on increase of the required total electric power.

9. A device (10) for recharging electric (VE₁, VE₂, VE_{N}) or hybrid vehicles, comprising charging stations (B₁, B₂, B_{N}) connected to an electric power grid (14), each charging station being connected to one of the vehicles to be recharged, the device further comprising, for each vehicle to be recharged, a control module (Mᵢ) built into said vehicle or into the charging station of said vehicle, the device comprising means (LD₁, LD₂, LD_{N}) for transmitting, to the control module for each vehicle to be recharged, data representative of a required total electric power (P_{S}^{*}) for recharging the vehicles, the device further comprising a sensor (16) capable of measuring the total electric power (P_{S}) supplied by the electric power grid (14) for recharging said vehicles and means (LD₁, LD₂, LD_{N}) for transmitting data representative of the measured total electric power to the control module for each vehicle to be recharged, said control module (Mᵢ) for each vehicle to be recharged being capable of determining a first coefficient (kᵢ) by fuzzy logic based on the state of charge (SOCᵢ) of the vehicle and on the recharge time (Tᵢ) of the vehicle and of determining a setting (P_{EVi}) of the electric power for recharging said vehicle based on the first coefficient and on the state of charge (SOCᵢ) of the vehicle, on the recharge time (Tᵢ) of the vehicle, and on the difference (ΔP_{S}) between the required total electric power (P_{S}^{*}) and the measured total electric power (P_{S}).
